(19) **Europäisches Patentamt**
**European Patent Office**
**Office européen des brevets**

(11) **EP 1 736 932 B1**

(12) **EUROPÄISCHE PATENTSCHRIFT**

(45) Veröffentlichungstag und Bekanntmachung des
Hinweises auf die Patenterteilung:
**16.09.2009 Patentblatt 2009/38**

(51) Int Cl.:
*G07B 15/00* (2006.01)      *G01C 21/26* (2006.01)

(21) Anmeldenummer: **06012971.5**

(22) Anmeldetag: **23.06.2006**

(54) **Verfahren und Anordung zum Bestimmen eines zurückgelegten Wegs eines Fahrzeugs**

Method and system for determining a distance travelled by a vehicle

Procédé et dispositif destinés à la détermination d'une trajectoire parcourue par un véhicule

(84) Benannte Vertragsstaaten:
**AT BE BG CH CY CZ DE DK EE ES FI FR GB GR
HU IE IS IT LI LT LU LV MC NL PL PT RO SE SI
SK TR**

(30) Priorität: **24.06.2005 DE 102005029447**

(43) Veröffentlichungstag der Anmeldung:
**27.12.2006 Patentblatt 2006/52**

(73) Patentinhaber: **Vodafone Holding GmbH
40213 Düsseldorf (DE)**

(72) Erfinder:
• **Robl, Christian
94560 Offenberg (DE)**

• **Freißler, Thomas
82131 Gauting (DE)**
• **Birle, Christian
80799 München (DE)**

(74) Vertreter: **Müller, Thomas
Patentanwalt
Müller & Schubert
Innere Wiener Strasse 13
81667 München (DE)**

(56) Entgegenhaltungen:
**EP-A- 1 120 749        WO-A-97/04421
US-A1- 2001 025 251**

**Beschreibung**

Die vorliegende Erfindung betrifft ein Verfahren zum Bestimmen eines zurückgelegten Wegs eines Fahrzeugs bei der Befahrung von -insbesondere nutzungsgebührenpflichtigen- Straßen innerhalb eines Straßennetzes gemäß dem Oberbegriff von Patentanspruch 1. Weiterhin betrifft die Erfindung eine Anordnung zum Bestimmen eines zurückgelegten Wegs eines Fahrzeugs bei der Befahrung von -insbesondere nutzungsgebührenpflichtigen- Straßen innerhalb eines Straßennetzes gemäß dem Oberbegriff von Patentanspruch 13.

Zur Erhebung von Straßennutzungsgebühren und zu demoskopischen Zwecken ist es bereits bekannt, den Aufenthalt von Kraftfahrzeugen in einem geografischen Gebiet zu erfassen. Das Gebiet kann hierbei ein Straßenzug, ein Tunnel, eine Brücke oder aber auch eine Stadt oder ein Land sein.

Neben manuellen Verfahren, bei denen ein Fahrer beispielsweise beim Einfahren in das Gebiet ein Ticket in Papierform zieht und dieses beim Verlassen einer Zahlstelle vorzeigt, oder bei dem ein in ein Gebiet einfahrendes Fahrzeug von einer Person, die einen Zähler bedient, erfasst wird, sind auch automatisierte Verfahren bekannt. Hierbei werden beispielsweise DSRC-basierte (dedicated short range communication) Systeme verwendet. Hierbei sind an vorgegebenen Stellen Erfassungsvorrichtungen, insbesondere an so genannten Brücken, vorgesehen, die ein in einem Fahrzeug befindliches Identifikationsmittel erkennen und die so erkannte Position des Fahrzeugs an eine Rechnerzentrale übermitteln können. Sind die Brücken beispielsweise an der Auffahrt für eine gebührenpflichtige Strecke und an der Abfahrt vorgesehen, so kann hierdurch die Streckenlänge bestimmt werden.

Auch über den Streckenverlauf einer gebührenpflichtigen Strecke können solche Brücken vorgesehen sein.

Diese Art des Erkennens des Aufenthalts von Fahrzeugen ist bezüglich der Installations- und Instandhaltungskosten sehr aufwändig.

Aus diesem Grund werden bereits auch Systeme vorgeschlagen, die auf der reinen satellitenbasierten Positionsbestimmung basieren. Hierbei werden Positionsdaten von einem Endgerät im Kraftfahrzeug (GPS-Empfänger) erhalten, und mit Kartendaten verglichen. Auf diese Weise kann die Position eines Kraftfahrzeuges auf einem in einer Karte angegebenen Streckenabschnitt erkannt werden.

Ein solches Verfahren zum Erfassen eines Fahrzeuges mittels GPS ist beispielsweise in der WO 03/034346A1 beschrieben. Bei dieser bekannten Lösung werden Fahrzeuge mit einem satellitengestützten Positionsbestimmungssystem bei der Benutzung von Straßen erfasst. Dazu übermittelt das Fahrzeug seine empfangenen Positionsdaten an ein Erfassungssystem. In dem Erfassungssystem werden die Positionsdaten mit den Daten einer digitalen Straßenkarte verglichen, wobei ausgewählte Straßen innerhalb der digitalen Straßenkarte in geeignete Abschnitte unterteilt sind. Jeder Abschnitt wiederum ist in digitale Rechtecksektoren unterteilt. Bei diesen digitalen Rechtecksektoren handelt es sich um so genannte modellierte Straßenabschnitte. Die erfassten Positionsdaten des Fahrzeugs werden dann den entsprechenden Rechtecksektoren zugeordnet.

Bei dieser bekannten Lösung wird ein modellierter Straßenabschnitt, der in der Regel als Polygonzug vorliegt, erst zur Betrachtung herangezogen, wenn eine gültige GPS-Position in einer fest dimensionierten Eintrittsfläche liegt. Die Bestimmung eines zurückgelegten Weges, insbesondere die Längenbestimmung oder die Rekonstruktion eines zurückgelegten Weges, ist daher nur unter Verwendung aller GPS-Positionen möglich. Daraus resultieren jedoch ein erhöhter Energieverbrauch, ein erhöhter Speicherverbrauch, eine erhöhte Rechenleistung im Erfassungssystem, eine erhöhte Übertragungszeit bei der Übertragung der Daten sowie eine erhöhte Datenmenge, die zu übertragen ist.

Weiterhin ist in der EP 1 120 749 A1 eine Vergebührungseinrichtung beschrieben. In dieser Einrichtung wird bei jeder von einem GPS-System erfassten Position eines Fahrzeuges bestimmt, ob diese Position einer Vergebührungszone oder in einer die Vergebührungszone umgebenden Pufferzone liegt. Abhängig von dem Bestimmungsergebnis wird eine Gebühr erhoben.

Ausgehend vom genannten Stand der Technik liegt der vorliegenden Erfindung die Aufgabe zu Grunde, ein Verfahren sowie eine Anordnung der eingangs genannten Art derart weiterzubilden, dass auf einfache Weise und mit möglichst einfacher und ressourcenschonender Bearbeitung und Berechnung von Daten der zurückgelegte Weg eines Fahrzeugs berechnet werden kann.

Diese Aufgabe wird erfindungsgemäß gelöst durch das Verfahren mit den Merkmalen gemäß dem unabhängigen Patentanspruch 1 sowie durch die Anordnung mit den Merkmalen dem unabhängigen Patentanspruch 13. Weitere Vorteile, Merkmale und Details der Erfindung ergeben sich aus den Unteransprüchen, der Beschreibung sowie den Zeichnungen. Merkmale, Vorteile und Details, die im Zusammenhang mit dem erfindungsgemäßen Verfahren beschrieben werden, gelten dabei selbstverständlich auch im Zusammenhang mit der erfindungsgemäßen Anordnung, und umgekehrt.

Ein grundlegendes Merkmal der vorliegenden Erfindung besteht darin, dass die Berechnung der zurückgelegten Strecke nicht mehr anhand aller ermittelten Positionsdaten erfolgt, sondern dass hierzu nunmehr nur noch eine -insbesondere wesentlich- geringere Anzahl von Positionsdaten erforderlich ist.

Dabei ist es mit der vorliegenden Erfindung beispielsweise möglich, die zurückgelegte Strecke beziehungsweise den zurückgelegten Weg eines Fahrzeug innerhalb eines Straßennetzes zu berechnen, um daraus beispielsweise Nutzungsgebühren zu berechnen. Die vorliegende Erfindung kann somit zur ressourcenschonenden Ermittlung von Nutzungsgebühren herangezogen werden. Ebenso ist es mit der vorliegenden Erfindung möglich, einen zurückgelegten Weg eines Fahrzeugs zu rekonstruieren beziehungsweise wiederherzustellen. Damit genügt die vorliegende Erfindung auch der Anforderung einer nachträglichen Möglichkeit der Rekonstruktion oder Begutachtung eines zurückgelegten Wegs zum Zwecke der Beweisbarkeit, eines Nachweises oder dergleichen. Dabei müssen im Hinblick auf Kosten- beziehungsweise Energieverbrauchsaspekte nicht unnötig viele Daten übertragen beziehungsweise berechnet und gespeichert werden, da die zur Bestimmung des zurückgelegten Wegs erforderliche Datenmenge auf ein Minimum reduziert werden kann.

Die vorliegende Erfindung stellt eine Lösung bereit, bei der ein zurückgelegter Weg eines Fahrzeugs mit Hilfe einer minimalen Anzahl an Positionsdaten bestimmt beziehungsweise rekonstruiert werden kann.

Darüber hinaus kann im Erfassungssystem eine Energieeinsparung realisiert werden, beispielsweise aufgrund der Reduzierung der zur Bestimmung des zurückgelegten Wegs notwendigen Positionsdaten, auf Grund der Reduktion einer notwendigen Speichergröße, auf Grund der Reduktion der Datenübertragungsmenge, die vorteilhaft per Mobilfunk übertragen werden, und dergleichen.

Gemäß dem ersten Aspekt der Erfindung wird ein Verfahren zum Bestimmen eines zurückgelegten Wegs eines Fahrzeugs bei der Befahrung von -insbesondere nutzungsgebührenpflichtigen Straßen- innerhalb eines Straßennetzes bereitgestellt, das folgende Schritte aufweist:

a) Positionsdaten eines dem Fahrzeug zugeordneten Endgeräts werden mittels eines Positionsbestimmungssystems ermittelt;
b) Die ermittelten Positionsdaten werden an ein Erfassungssystem mit wenigstens einer Rechnereinheit übertragen;
c) Aus den übertragenen Positionsdaten wird im Erfassungssystem der zurückgelegte Weg des Fahrzeugs ermittelt, und
d) dass die Berechnung des zurückgelegten Wegs nur anhand solcher Positionsdaten erfolgt, die mindestens einem vorgegebenen Auswahlkriterium entsprechen, wobei als Positionsdaten innerhalb eines modellierten Straßenabschnittes Positionsdaten verwendet werden, die den modellierten Straßenabschnitt identifizieren, und als Positionsdaten außerhalb eines modellierten Straßenabschnitts Positionsdaten verwendet werden, die von mindestens einem vorgegebenen Schwellenwert abweichen.

Gemäß einem ersten Schritt a) werden Positionsdaten eines dem Fahrzeug zugeordneten Endgeräts mittels eines Positionsbestimmungssystems ermittelt. Dabei ist die Erfindung nicht auf bestimmte Positionsbestimmungssysteme beschränkt. Vorteilhaft kann es sich bei dem zu verwendenden Positionsbestimmungssystem um ein satellitengestütztes Positionsbestimmungssystem, etwa ein Satellitennavigationssystem (GPS), um ein Peilsystem oder dergleichen handeln.

Die ermittelten Positionsdaten werden in einem nächsten Schritt b) vom Endgerät innerhalb des Fahrzeugs an ein Erfassungssystem übertragen. Dieses Erfassungssystem verfügt über wenigstens eine Rechnereinheit, in der die ermittelten Positionsdaten weiter verarbeitet werden. Insbesondere wird in einem anschließenden Schritt c), im Erfassungssystem anhand der übertragenen Positionsdaten der zurückgelegte Weg des Fahrzeugs berechnet.

Dazu kann beispielsweise vorgesehen sein, dass das Straßennetz in Form einer digitalen Straßenkarte vorgesehen ist, die in einer dafür vorgesehenen Speichereinrichtung abgespeichert ist. Das Erfassungssystem kann auf diese Speichereinrichtung zugreifen, um die gemessenen Positionsdaten mit entsprechenden Daten der digitalen Straßenkarte zu vergleichen. Dabei kann beispielsweise vorgesehen sein, dass die Speichereinrichtung mit der digitalen Straßenkarte Bestandteil des Erfassungssystems ist. Ebenso ist es natürlich auch denkbar, dass die digitale Straßenkarte in einer vom Erfassungssystem unabhängigen Speichereinrichtung abgespeichert ist, wobei das Erfassungssystem dann zumindest zeitweilig mit der Speichereinrichtung verbunden ist beziehungsweise auf diese zugreift.

Um den erforderlichen Rechenaufwand bei der Bestimmung des zurückgelegten Wegs zu minimieren beziehungsweise um die Berechnung möglichst ressourcenschonend innerhalb des Erfassungssystems durchführen zu können, ist erfindungsgemäß nunmehr vorgesehen, dass die Berechnung des zurückgelegten Wegs nicht mehr anhand aller übertragenen Positionsdaten erfolgt, sondern dass hierzu nur noch bestimmte Positionsdaten herangezogen werden. Bei diesen Positionsdaten handelt es sich um solche, die mindestens einem vorgegebenen Auswahlkriterium entsprechen. Das bedeutet, dass die Anzahl der zur Bestimmung des zurückgelegten Wegs genutzten und benötigten Positionsdaten kleiner ist als die Gesamtanzahl aller ermittelten Positionsdaten. Nunmehr wird nur noch die minimal erforderliche Anzahl an Positionsdaten verwendet, um eine sichere Bestimmung des zurückgelegten Wegs eines Fahrzeugs vorzunehmen.

Dabei ist die Erfindung nicht auf eine bestimmte Ausgestaltung beziehungsweise Anordnungsvariante des Erfassungssystems beschränkt. Nachfolgend werden diesbezüglich einige nicht ausschließliche Beispiele beschrieben.

Beispielsweise ist es denkbar, dass ein Fahrzeug mit einer so genannten On-Board-Unit (OBU) ausgerüstet ist. Hierbei kann es sich um ein Gerät handeln, das sowohl das Endgerät zur Ermittlung der Positionsdaten als auch das Erfassungssystem in sich vereinigt. Die ermittelten Positionsdaten werden in der OBU gleich weiter verarbeitet, so dass die Bestimmung des zurückgelegten Wegs des Fahrzeugs innerhalb von dessen OBU erfolgt. Der auf diese Weise berechnete zurückgelegte Weg wird dann an eine außerhalb des Fahrzeugs befindliche zentrale Rechnereinheit übertragen, wo beispielsweise dem zurückgelegten Weg zugeordnete Nutzungsgebühren berechnet werden. Die Übertragung der Daten erfolgt dabei vorzugsweise über ein Mobilfunknetz. Durch das erfindungsgemäße Verfahren kann nunmehr die Menge der zu übertragenden Daten von der im Fahrzeug befindlichen OBU auf die externe zentrale Rechnereinheit deutlich reduziert werden. Weiterhin ist es möglich, die Daten zum Zwecke der Rekonstruktion eines zurückgelegten Weges ressourcenschonend von der OBU zu der zentralen Rechnereinheit zu übertragen.

Gemäß einer anderen Ausführungsform kann beispielsweise vorgesehen sein, dass in dem Fahrzeug lediglich ein Endgerät zur Ermittlung der Positionsdaten vorgesehen ist, und dass die auf diese Weise ermittelten Positionsdaten anschließend zu einer externen zentralen Rechnereinheit, die dann das Erfassungssystem zum Bestimmen des zurückgelegten Wegs des Fahrzeugs darstellt, übertragen werden. Die erfindungsgemäß beschriebene Berechnung des zurückgelegten Wegs erfolgt dann in der externen zentralen Rechnereinheit, was dort zu einer Reduktion des Rechenaufwands in der OBU führt.

Gemäß einer weiteren Ausführungsform kann beispielsweise vorgesehen sein, dass in dem Fahrzeug eine OBU vorgesehen ist, in der die Positionsdaten des Fahrzeugs ermittelt werden und in der die zur Berechnung des zurückgelegten Wegs erforderlichen Positionsdaten bestimmt werden. Lediglich diese ausgewählten Positionsdaten werden anschließend zu einer externen zentralen Rechnereinheit übertragen und dort in gewünschter Weise weiterverarbeitet. Auf diese Weise kann wiederum die Menge der übertragenen Daten deutlich reduziert werden.

Gemäß der vorliegenden Erfindung ist vorgesehen, dass zur Berechnung des zurückgelegten Wegs solche Positionsdaten herangezogen werden, die einem vorgegebenen Auswahlkriterium entsprechen. Dabei ist die Erfindung nicht auf bestimmte Auswahlkriterien beschränkt. "Auswahlkriterium" soll im Lichte der vorliegenden Erfindung bedeuten, dass aus allen ermittelten Positionsdaten einige wenige charakteristische Positionsdaten ausgewählt werden, die geeignet sind, den Nachweis über die Befahrung eines bestimmten Streckenabschnitts zu liefern, wobei als Positionsdaten innerhalb eines modellierten Straßenabschnittes Positionsdaten verwendet werden, die den modellierten Straßenabschnitt identifizieren, und als Positionsdaten außerhalb eines modellierten Straßenabschnitts Positionsdaten verwendet werden, die von mindestens einem vorgegebenen Schwellenwert abweichen. Einige nicht ausschließliche Beispiele, wie dies im Einzelnen geschehen kann, werden im weiteren Verlauf der Beschreibung näher erläutert.

Vorzugsweise ist vorgesehen, dass anhand der ermittelten Positionsdaten im Erfassungssystem zunächst überprüft wird, ob oder ob nicht das Fahrzeug einen modellierten Straßenabschnitt befährt. Derartige modellierte Straßenabschnitte sind beispielsweise in der oben genannten WO 03/034346A1 beschrieben, deren Offenbarungsgehalt in soweit in die Beschreibung der vorliegenden Erfindung mit einbezogen wird. Bei einem modellierten Straßenabschnitt handelt es sich generell um einen geografischen Bereich mit einer definierten, modellierten Länge und Lage. Das kann beispielsweise derart erfolgen, dass das Erfassungssystem eine Rechnereinheit mit einer Speichereinrichtung enthält, in der eine digitale Straßenkarte vorliegt. Ausgewählte Straßen dieser digitalen Straßenkarte sind in geeignete Abschnitte unterteilt, wobei jeder Abschnitt wiederum in digitale Rechtecksektoren, die modellierten Straßenabschnitte, unterteilt ist. Weiterhin sind geeignete Mittel zum Zuordnen dieser modellierten Straßenabschnitte zu den erfassten Positionsdaten des Fahrzeugs vorgesehen. Die modellierten Straßenabschnitte liegen über der tatsächlichen Straßenführung und weisen eine geeignete Länge und/oder Breite auf. Sofern der Eintritt eines Fahrzeugs in einen solchen modellierten Straßenabschnitt erkannt wird, wird das Erfassungssystem aktiviert. Ebenso wird das Erfassungssystem wieder deaktiviert, sobald das Fahrzeug den modellierten Straßenabschnitt verlässt.

In diesem Zusammenhang ist weiterhin auch vorgesehen, dass ein gewisser Toleranzbereich festgelegt wird, in dem die Aktivierung beziehungsweise Deaktivierung der Erfassung des Fahrzeugs erfolgt. Auf diese Weise soll verhindert werden, dass Fahrzeuge die eigentlich nicht oder noch nicht erfasst werden dürften, die aber gegebenenfalls in den Randbereich eines zu erfassenden modellierten Straßenabschnitts gelangen, nicht bei der Erfassung berücksichtigt werden. Durch diese Maßnahme werden nur solche Fahrzeuge erfasst, die sich auch tatsächlich innerhalb des zu erfassenden Bereichs befinden.

Bisher liegen derart modellierte Straßenabschnitte in erster Linie nur für ausgewählte Straßen wie beispielsweise Autobahnen, bestimmte Brücken und dergleichen vor.

Mit der vorliegenden Erfindung ist es nunmehr auch möglich, einen zurückgelegten Weg eines Fahrzeugs zu bestimmen, wenn dieses nicht einen modellierten Straßenabschnitt befährt. Hierbei kann es sich beispielsweise um Landstraßen und dergleichen handeln. Die vorliegende Erfindung ist somit auch für solche Straßennetze einsetzbar, für die zwar eine Reihe von modellierten Straßenabschnitten existieren, bei denen jedoch auch Straßenabschnitte vorliegen, für die eine entsprechende Modellierung nicht existiert. Wenn es sich bei modellierten Straßenabschnitten beispielsweise um Autobahnen handelt, sind durchaus Szenarien denkbar, in den ein Großteil des Verkehrs über Landstraßen und somit über nicht modellierte Straßenabschnitte erfolgt. Dennoch kann es wünschenswert sein, den zurückgelegten Weg von Fahrzeugen auch auf solchen Landstraßen zu bestimmen. Dies ist mit der vorliegenden Erfindung nunmehr möglich.

Vorteilhaft können die wie weiter oben beschriebenen digitalen Straßenkarten in Form von Vektordaten vorliegen. Dadurch ist eine einfache Verarbeitung von Kartendaten in einer Rechnereinheit gewährleistet. Für die digitalen Karten kann dann je nach Bedarf ein beliebiger Maßstab angenommen werden, ohne dass sich dabei die Grundinformation der Vektordaten und somit der digitalen Straßenkarte an sich, ändert.

In diesem Zusammenhang ist ebenfalls vorteilhaft vorgesehen, dass auch die ermittelten Positionsdaten in Form von Vektordaten ermittelt, übertragen und verarbeitet werden.

Vorteilhaft kann die Berechnung des zurückgelegten Wegs anhand der Positionsdaten mittels eines Berechnungsverfahrens erfolgen, wobei die Erfindung grundsätzlich nicht auf bestimmte Berechnungsverfahren beschränkt ist. Beispielsweise kann die Berechnung mittels eines Approximationsverfahrens oder eines Interpolationsverfahrens, beispielsweise der so genannten Spline-Interpolation, erfolgen.

Wenn die Bestimmung eines zurückgelegten Wegs außerhalb eines modellierten Straßenabschnitts erfolgt, kann die Anzahl der zur Bestimmung des zurückgelegten Wegs erforderlichen Positionsdaten (beispielsweise Positionsvektoren) soweit reduziert werden, dass mittels eines Approximationsverfahrens, beispielsweise einer Spline-Interpolation, der Weg innerhalb einer Toleranz bestimmt, beispielsweise rekonstruiert, werden kann. Die zurückgelegte Strecke kann durch Ermittlung der Länge der approximierten oder interpolierten Funktion näherungsweise berechnet werden.

Durch Anwendung einer Polynom-Approximation beispielsweise kann die Anzahl der notwendigen Positionsdaten (beispielsweise Positionsvektoren) zur Nachvollziehbarkeit des zurückgelegten Wegs deutlich reduziert werden. Eine weitere Reduktion dieser Anzahl und der damit verbundenen Datenmenge kann unter Berücksichtigung von befahrenen modellierten Straßenabschnitten erfolgen, wie im weiteren Verlauf der Beschreibung noch näher erläutert wird.

Vorteilhaft kann es sich bei dem Berechnungsverfahren auch um ein Verfahren zur Polygon-Approximation handeln. Der Sinn und Zweck eines derartigen Berechnungsverfahrens besteht darin, Positionsdaten, die sich auf einer zufällig angeordneten Kurve befinden, mit geraden Linien zu kombinieren. Die geraden Linien werden entweder durch einen Start- und einen Endpunkt spezifiziert, oder aber durch einen Startpunkt, einen Winkel und eine Länge (Vektor). Die Hauptaufgabe des Berechnungsverfahrens besteht darin zu erkennen, wo die Start-und Endpunkte in der geraden Linie zu setzen sind.

Nachfolgend werden verschiedene Auswahlkriterien zur Auswahl solcher Positionsdaten beschrieben, die für die Berechnung des zurückgelegten Wegs herangezogen werden.

Vorzugsweise kann die Berechnung des außerhalb von modellierten Straßenabschnitten zurückgelegten Wegs nur anhand solcher Positionsdaten erfolgen, die über einem definierten Schwellenwert liegen. Insbesondere bei der Reduzierung der zur Berechnung herangezogenen Positionsdaten außerhalb von modellierten Straßenabschnitten werden daher erfindungsgemäß immer nur solche Positionsdaten berücksichtigt, die von mindestens einem vorgegebenen Schwellenwert abweichen.

Dazu kann beispielsweise vorgesehen sein, dass die Berechnung des zurückgelegten Wegs nur anhand solcher Positionsdaten erfolgt, die über einem definierten Schwellwert bezüglich der Fahrtrichtungsabweichung und/oder bezüglich der Änderung der Positionsdaten und/oder der Qualität der Positionsdaten liegen.

Beispielsweise kann vorgesehen sein, dass die Auswahl der notwendigen Positionsdaten von einer Fahrtrichtungsänderung (beispielsweise 3 °) oder von der Anzahl der Änderungen des Positionsdatums (beispielsweise kann jedes 10. geänderte Positionsdatum berücksichtigt werden) und/oder von der Positionsdatumsqualität (Dilution of Precision, DoP) abhängig sein. Beispielsweise kann ein Positionsdatum dann berücksichtigt werden, wenn die Qualität des Positionsdatums über einem definierten Schwellwert und die Anzahl der Änderungen des Positionsdatums über einem anderem Schwellwert liegen. Gemäß einem anderen Beispiel kann beispielsweise ein Positionsdatum dann bei der Bestimmung des zurückgelegten Weges berücksichtigt werden, wenn die Qualität des Positionsdatums über einem definierten Schwellwert und die Fahrtrichtungsänderung bezüglich der Länge über einem anderen Schwellwert liegen.

Gemäß einer vorteilhaften Ausführungsform wird für alle ermittelten Positionsdaten mittels eines Berechnungsverfahrens eine Ausgleichsgerade berechnet. Als Schwellwert wird ein vorgegebener Lotabstand zu der Ausgleichsgeraden festgelegt. Bei Ermittlung eines Positionsdatums, das einen größeren Abstand zur Ausgleichsgeraden als der vorgegebene Lotabstand aufweist, wird dann das unmittelbar vor diesem Positionsdatum ermittelte Positionsdatum zur Berechnung des zurückgelegten Wegs herangezogen. Bei dieser Berechnungsmethode beginnt eine neue Ausgleichsgerade, wenn die Abweichung von der bisher bestehenden Ausgleichsgeraden einen vorgegebenen Schwellwert, nämlich einen vorgegebenen Lotabstand, übersteigt. Nachdem ein Endpunkt der Ausgleichsgeraden ermittelt worden ist, wird eine neue Ausgleichsgerade aufgebaut.

Der wie vorstehend beschriebene Lotabstand stellt gleichzeitig auch eine Art Toleranzbereich dar. Der Toleranzbereich wird dann von seiner Lage her auf die Ausgleichsgerade bezogen. Wenn der Lotabstand eines ermittelten Positionsdatums zur Ausgleichsgeraden größer ist als der vorgegebene Lotabstand, bei dem es sich dann um den Toleranzwert handelt, wird das vorhergehende Positionsdatum als eine Art Stützpunkt angesehen. Bei der Berechnung des zurückgelegten Wegs werden nur derartige Stützpunkte berücksichtigt.

Vorteilhaft ist der durch den vorgegebenen Lotabstand definierte Toleranzbereich kleiner als der weiter oben beschriebene Toleranzbereich, der bei den modellierten Straßenabschnitten berücksichtigt wird. Ein derartiger Toleranzbereich im Zusammenhang mit einem modellierten Straßenabschnitt wird vorzugsweise derart gewählt, dass er zumindest die Mess-Ungenauigkeiten des verwendeten Positionsbestimmungssystems berücksichtigt. Beispielsweise kann ein modellierter Straßenabschnitt beispielsweise eine Toleranzbreite von 20 Metern aufweisen. Ein im Zusammenhang mit dem Lotabstand gebildeter Toleranzbereich ist vorzugsweise halb so klein (beispielsweise 10 Meter) wie der Toleranzbereich im Zusammenhang mit einem modellierten Straßenabschnitt.

Gemäß einer anderen bevorzugten Ausführungsform kann für alle ermittelten Positionsdaten mittels eines Berechnungsverfahrens wiederum eine Ausgleichsgerade berechnet werden. Als Schwellwert wird bei dieser Ausführungsform jedoch ein vorgegebener Winkel zu der Ausgleichsgeraden festgelegt. Bei Ermittlung eines Positionsdatums, das einen größeren Winkel zur Ausgleichsgeraden als der vorgegebene Winkel aufweist, wird das unmittelbar vor diesem besagten Positionsdatum ermittelte Positionsdatum zur Berechnung des zurückgelegten Wegs herangezogen. Ein entsprechendes Positionsdatum zur Berechnung des zurückgelegten Wegs wird in einem solchen Fall dann festgestellt, wenn ein bestimmter, vorgegebener Winkel überschritten wird.

In weiterer Ausgestaltung kann vorgesehen sein, dass die Berechnung des zurückgelegten Wegs anhand von Positionsdaten erfolgt, die nach einem bestimmten Zeitintervall und/oder nach einer bestimmten Strecke ermittelt werden. Beispielsweise kann vorgesehen sein, dass jedes x-te (beispielsweise jedes 5-te oder 10-te) Positionsdatum zur Bestimmung des zurückgelegten Wegs herangezogen wird. Weiterhin ist denkbar, dass in bestimmten Zeitabständen und/oder bestimmten Längenabständen ermittelte Positionsdaten zur Bestimmung des zurückgelegten Wegs herangezogen werden.

Alle wie vorstehend beschriebenen Auswahlkriterien können sowohl einzeln als auch in jeder beliebigen Kombination zum Einsatz kommen.

Erfindungsgemäß ist vorgesehen, dass wenn im Erfassungssystem erkannt wird, dass das Fahrzeug einen modellierten Straßenabschnitt befährt, als Positionsdaten für die Berechnung des zurückgelegten Wegs solche Positionsdaten verwendet werden, die den modellierten Straßenabschnitt identifizieren. Auf diese Weise wird es möglich, die Anzahl der erforderlichen Positionsdaten zur Bestimmung des zurückgelegten Wegs weiter zu reduzieren. Für den Nachweis, dass der Weg auf einem modellierten Straßenabschnitt zurückgelegt wurde, sind lediglich einige wenige Positionsdaten erforderlich, und zwar unabhängig von der Länge des modellierten Straßenabschnitts. Da der modellierte Straßenabschnitt hinsichtlich möglicher Positionsdatenabweichungen, beispielsweise GPS-Abweichungen als auch hinsichtlich möglicher geografischer Gegebenheiten modelliert wurde, ist der Nachweis, dass ein modellierter Straßenabschnitt befahren wurde, mit der Identifikation des modellierten Straßenabschnitts gegeben. Vorteilhaft ist, wenn, wie in der WO03/034346A1 beschrieben, auch nach der Identifikation des modellierten Straßenabschnitts weiter der Weg in diesem modellierten Straßenabschnitt hinsichtlich Richtung und Abstand überprüft wird, so dass der bis zum Austrittspunkt zurückgelegte Weg innerhalb einer Toleranz (das heißt innerhalb der Breite des modellierten Straßenabschnitts, beispielsweise 20 Meter) eindeutig nachvollziehbar ist. Die zurückgelegte Streckenlänge muss dann somit näherungsweise der Länge des modellierten Straßenabschnitts entsprechen.

Vorteilhaft kann vorgesehen sein, dass für die Berechnung des zurückgelegten Wegs solche Positionsdaten verwendet werden, die den Eintritt in den modellierten Straßenabschnitt und/oder den Austritt aus dem modellierten Straßenabschnitt und/oder ein erstes Positionsdatum außerhalb des modellierten Straßenabschnitts markieren. Das erste in dieser Aufzählung genannte Positionsdatum zeigt auf eine Koordinate, bei welcher der modellierte Straßenabschnitt zum ersten Mal erkannt wurde. Das zweite in der Aufzählung benannte Positionsdatum zeigt auf eine Koordinate, bei der der modellierte Straßenabschnitt verlassen wurde. Hierbei handelt es sich dann um das letzte Positionsdatum im modellierten Straßenabschnitt. Das dritte in der Aufzählung genannte Positionsdatum stellt das erste Positionsdatum außerhalb des modellierten Straßenabschnitts dar.

In weiterer Ausgestaltung kann vorgesehen sein, dass für die Berechnung des zurückgelegten Wegs wenigstens ein Positionsdatum verwendet wird, das einen Identifizierungspunkt innerhalb des modellierten Straßenabschnitts bildet. Dieser Positionsvektor zeigt dann auf eine Koordinate, bei welcher der modellierte Straßenabschnitt eindeutig identifiziert wurde.

Bei der Prüfung eines modellierten Straßenabschnitts werden gemäß einer vorteilhaften, beispielhaften Ausgestaltung drei Positionsdaten verwendet, nämlich ein Positionsdatum im Eintrittsbereich des modellierten Abschnittsbereichs, ein Positionsdatum zur Identifizierung des modellierten Straßenabschnitts sowie ein Positionsdatum im Austrittsbereich des modellierten Straßenabschnitts. Optional kann beispielsweise auch noch ein viertes Positionsdatum zur Verifizierung des modellierten Straßenabschnitts verwendet werden, bei dem es sich dann vorteilhaft um das erste Positionsdatum außerhalb des modellierten Straßenabschnitts handelt. Dieses Positionsdatum kann beispielsweise den Eintrittspunkt in den nächsten, benachbarten modellierten Straßenabschnitt darstellen.

Auch bezüglich der zuvor genannten Auswahlkriterien für die zum Bestimmen des zurückgelegten Wegs herangezogenen Positionsdaten ist zu sagen, dass diese jeweils für sich alleine, oder aber in jeder beliebigen Kombination verwendet werden können.

Vorteilhaft kann vorgesehen sein, dass einem wie vorstehend beschriebenen erfassten Fahrzeug beziehungsweise einem von einem entsprechend erfassten Fahrzeug zurückgelegten Weg Gebühren zugeordnet werden können. Hierbei handelt es sich dann in erster Linie um Straßennutzungsgebühren, die auch als Mautgebühren oder dergleichen bezeichnet werden.

Gemäß dem erfindungsgemäßen Verfahren kann der zurückgelegte Weg eines Fahrzeugs auf unterschiedliche Weise ermittelt werden. Zum einen ist es möglich, dass mit dem Verfahren die zurückgelegte Route eines Fahrzeugs in einem Straßennetz bestimmt wird. Alternativ oder zusätzlich ist es auch möglich, dass mit dem erfindungsgemäßen Verfahren die zurückgelegte Entfernung in einem Straßennetz bestimmt wird. Im letzt genannten Fall ist es beispielsweise möglich, dass eine zu entrichtende Nutzungsgebühr allein nach der Länge des zurückgelegten Wegs eines Fahrzeugs auf einem bestimmten Straßentyp zu Grunde gelegt wird. Mit der vorliegenden Erfindung kann somit sowohl die geografisch gefahrene Strecke als auch die Länge der gefahrenen Strecke bestimmt werden.

Gemäß dem zweiten Aspekt der Erfindung wird eine Anordnung zum Bestimmen des zurückgelegten Wegs eines Fahrzeugs bei der Befahrung von -insbesondere nutzungsgebührenpflichtigen- Straßen innerhalb eines Straßennetzes bereitgestellt, aufweisend ein Positionsbestimmungssystem zum Ermitteln von Positionsdaten eines dem Fahrzeug zugeordneten Endgeräts, ein Erfassungssystem mit wenigstens einer Rechnereinheit, an welches die Positionsdaten übertragen werden oder übertragbar sind, sowie Mittel, um aus den übertragenen Positionsdaten den zurückgelegten Weg des Fahrzeugs zu berechnen. Die Mittel zur Berechnung des zurückgelegten Wegs sind dabei ausgebildet, dass zur Berechnung des zurückgelegten Wegs nur solche Positionsdaten ausgewählt oder verwendet werden, die mindestens einem vorgegebenen Auswahlkriterium entsprechen, wobei als Positionsdaten innerhalb eines modellierten Straßenabschnittes Positionsdaten verwendet werden, die den modellierten Straßenabschnitt identifizieren, und als Positionsdaten außerhalb eines modellierten Straßenabschnitts Positionsdaten verwendet werden, die von mindestens einem vorgegebenen Schwellenwert abweichen.

Zu der Konstruktionsweise, den Vorteilen, der Wirkung sowie Funktionsweise der erfindungsgemäßen Anordnung wird insbesondere auch auf die Ausführungen zum erfindungsgemäßen Verfahren vollinhaltlich Bezug genommen und hiermit verwiesen. Vorteilhaft weist die Anordnung Mittel zur Durchführung des erfindungsgemäßen Verfahrens auf.

Die vorliegende Erfindung schafft insbesondere die Möglichkeit zur Bestimmung und/oder Rekonstruktion der im Erfassungssystem (beispielsweise einer OBU) erkannten oder auch nicht erkannten modellierten Straßenabschnitte, beispielsweise in einem Hintergrundsystem, sowie die Bestimmung und/oder Rekonstruktion der zurückgelegten Route auf nicht durch modellierte Straßenabschnitte modellierten Straßen inklusive der Bestimmung der zurückgelegten Entfernung, beispielsweise in einem Hintergrundsystem.

Die Erfindung wird nun anhand von Ausführungsbeispielen unter Bezugnahme auf die beiliegenden Zeichnungen näher erläutert. Es zeigen:

Figur 1    in schematischer Ansicht eine Berechnungsverfahren zum Ermitteln von Positionsdaten für die Bestimmung eines zurückgelegten Wegs eines Fahrzeugs;

Figur 2    in schematischer Darstellung das Prinzip der zum Rekonstruieren eines zurückgelegten Wegs erforderlichen Positionsdaten außerhalb eines modellierten Straßenabschnitts im Falle einer Schwellwertüberschreitung bezüglich der Fahrtrichtungsänderung; und

Figur 3    in schematischer Darstellung die Ermittlung der erforderlichen Positionsdaten, die zur eindeutigen Nachvollziehbarkeit des zurückgelegten Wegs in einem modellierten Straßenabschnitt erforderlich sind.

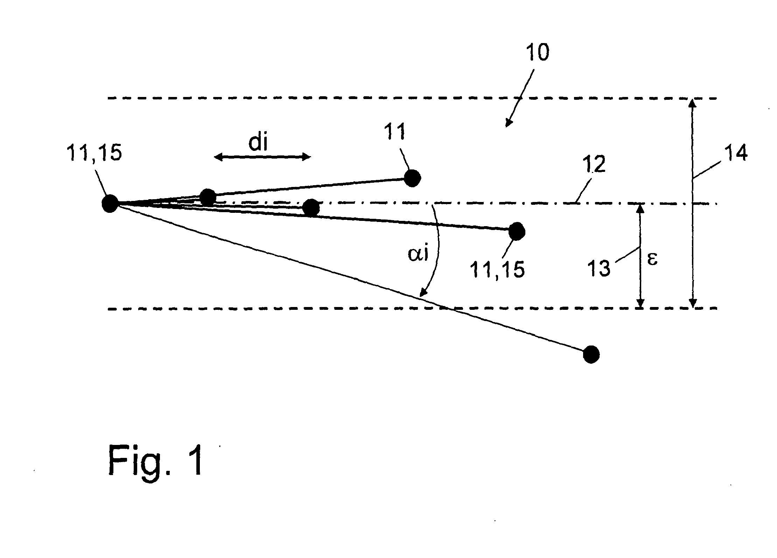

In Figur 1 ist dargestellt, wie mittels eines Berechnungsverfahrens, bei dem es sich im Beispiel um das Verfahren der Polygon-Approximation handelt, geeignete Positionsdaten ermittelt werden können, die zur Bestimmung eines zurückgelegten Wegs eines Fahrzeugs auf einer Straße 10 herangezogen werden können.

Ausgangspunkt für die Bestimmung eines zurückgelegten Weges ist, dass mittels eines Positionsbestimmungssystems, bei dem es sich im vorliegenden Fall um ein satellitengestütztes Navigationssystem (GPS) handelt, Positionsdaten 11 eines dem Fahrzeug zugeordneten Endgeräts ermittelt werden. Diese Positionsdaten 11 werden in regelmäßigen Abständen ermittelt und an ein Erfassungssystem mit wenigstens einer Rechnereinheit übertragen. Aus den übertragenen Positionsdaten 11 wird dann im Erfassungssystem der zurückgelegte Weg des Fahrzeugs berechnet. Dies kann beispielsweise mittels der in Figur 1 dargestellten Polygon-Approximation erfolgen.

Ausgehen von einem Startpunkt, bei dem es sich in Figur 1 um den linken Punkt handelt, der mit 11,15 bezeichnet ist, werden die einzelnen Positionsdaten 11, die in Bezug auf den Startpunkt auf einer kurvenförmigen Linie liegen, mit geraden Linien kombiniert. Aus diesen jeweiligen Einzellinien wird dann in einer Rechnereinheit eines Erfassungssystems eine Ausgleichsgerade 12 berechnet. Die Hauptaufgabe des Berechnungsverfahrens besteht nun darin herauszufinden, wo jeweils Startpunkte und Endpunkte auf den geraden Linien gesetzt werden sollen.

Bei dem in Figur 1 dargestellten Beispiel wird beispielsweise eine neue Gerade, das heißt eine neue Ausgleichsgerade 12 angenommen, wenn der Lotabstand 13 eines Positionsdatums 11 zur Ausgleichsgerade 12 größer als ein vorgegebener Wert ist, bei dem es sich insbesondere um einen Toleranzbereich 14 um die Ausgleichsgerade 12 herum handeln kann. Wird ein solches Positionsdatum ermittelt, dann handelt es sich bei dem jeweils vorhergehenden Positionsdatum, das in der Zeichnung gemäß Figur 1 weiter rechts mit 11,15 bezeichnet ist, um einen Endpunkt. Nachdem dieser Endpunkt gefunden wurde, wird durch das Berechnungsverfahren eine neue Ausgleichsgerade berechnet, für die der zuvor ermittelte Endpunkt gleichzeitig den Startpunkt bildet.

Die Abweichung von der berechneten Ausgleichsgeraden kann wie folgt approximiert werden:

$$\varepsilon = \left( \sum_i d_i \right) \cdot \tan \alpha_i;$$

Die kleinste Quadrat-Ausgleichsgerade wird wie folgt definiert:

$$y = a + b \cdot x;$$

Eine Minimierung

$$\sum \left( a + b \cdot x_n - y_n \right)^2$$

liefert die Koeffizienten

$$a = \frac{\sum y_n}{N} - \frac{b \cdot \sum x_n}{N};$$

$$b = \frac{\sum x_n \cdot y_n - \frac{\sum x_x \cdot \sum y_n}{N}}{\sum x_n^2 - \frac{\sum x_n \cdot \sum x_n}{N}};$$

wobei N die Anzahl der Messwerte ist.

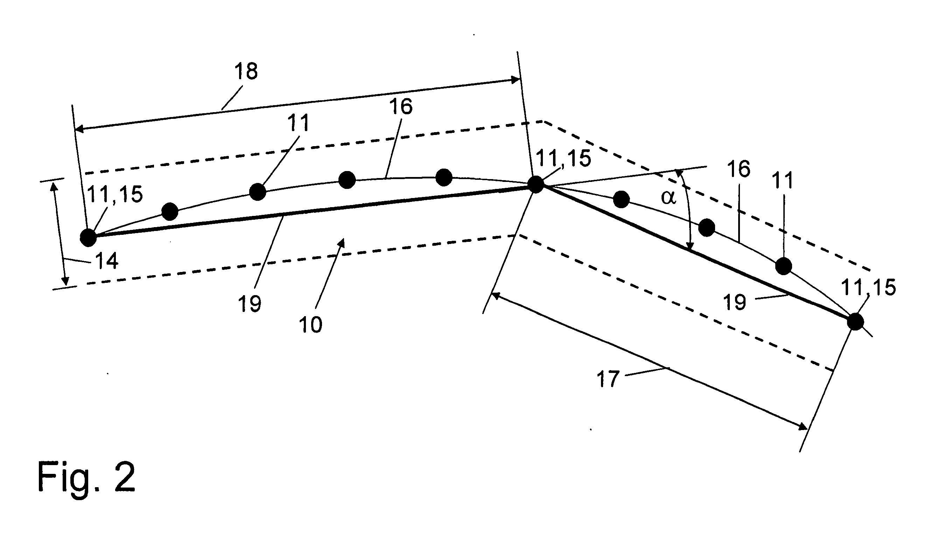

In Figur 2 ist schematisch das Prinzip dargestellt, wie mit Hilfe von Positionsdaten, die zur Bestimmung eines zurückgelegten Wegs herangezogen werden sollen, außerhalb eines modellierten Straßenabschnitts im Falle einer Schwellwertüberschreitung bezüglich der Fahrtrichtungsänderung der zurückgelegte Fahrtweg rekonstruiert werden kann.

Zunächst werden, wie im Zusammenhang mit der Figur 1 beschrieben, charakteristische Positionsdaten 11,15 ermittelt. Aus diesen reduzierten Positionsdaten 11,15 wird dann der zurückgelegte Weg 19 des Fahrzeugs berechnet, wobei sich das Fahrzeug auf einer Straße 10 befindet und den tatsächlichen Weg 16 zurücklegt. Im dargestellten Beispiel setzt sich der berechnete zurückgelegte Weg 19 des Fahrzeugs aus zwei Längeneinheiten 17, 18 zusammen.

Um aus den wenigen, charakteristischen Positionsdaten 11,15, die zur Berechnung des zurückgelegten Wegs 19 erforderlich sind, die gesamte zurückgelegte Strecke rekonstruieren zu können, kann es erforderlich sein, dass der dafür eingesetzte Algorithmus mehr als die wenigen charakteristischen Positionsdaten 11,15 benötigt.

Beispielsweise kann vorgesehen sein, dass die charakteristischen Positionsdaten 11,15 an eine Rechnereinheit übertragen werden, wobei es sich bei der Rechnereinheit beispielsweise um eine externe Rechnereinheit handeln kann, die auch als "Backoffice" bezeichnet werden kann. In der Rechnereinheit soll anhand der übertragenen charakteristischen Positionsdaten 11,15 die zurückgelegte Strecke 16 des Fahrzeugs rekonstruiert werden. Dazu kann es erforderlich sein, dass auch Positionsdaten 11 zu verwenden sind, die sich zwischen zwei charakteristischen Positionsdaten 11,15 befinden, allerdings nicht zur Rechnereinheit übertragen wurden. Diese Positionsdaten 11 können dann in der Rechnereinheit unter Verwendung eines geeigneten Berechnungsverfahrens, beispielsweise einer Spline-Interpolation, konstruiert werden.

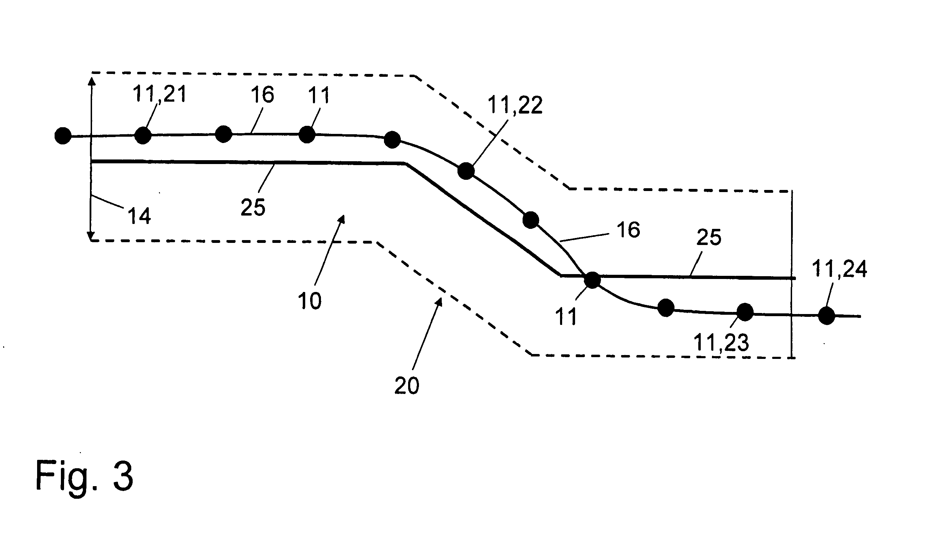

In Figur 3 schließlich ist schematisch die Ermittlung der erforderlichen Positionsdaten dargestellt, die zur eindeutigen Nachvollziehbarkeit eines zurückgelegten Wegs innerhalb eines modellierten Straßenabschnitts 20 einer Straße 10 erforderlich sind.

Wiederum soll vorgesehen sein, dass ein Fahrzeug einen tatsächlich zurückgelegten Weg 16 durchfährt, wobei in regelmäßigen Abständen Positionsdaten 11 erzeugt werden. Für den Nachweis, dass der Weg tatsächlich innerhalb des modellierten Straßenabschnitts 20 zurückgelegt wurde, sind lediglich 3, optional 4 Positionsdaten notwendig, und zwar unabhängig von der Länge des modellierten Straßenabschnitts 20. Das erste Positionsdatum 11,21 zeigt auf die Koordinate, bei welcher der modellierte Straßenabschnitt 20 zum ersten Mal erkannt wurde. Das zweite Positionsdatum 11,22 zeigt auf die Koordinate, bei welcher der modellierte Straßenabschnitt identifiziert wurde, und das dritte Positionsdatum 11,23 zeigt auf die Koordinate, bei welcher der modellierte Straßenabschnitt 20 verlassen wurde. Zusätzlich oder alternativ zu diesem letzten Positionsdatum 11,23 im modellierten Straßenabschnitt 20 kann das erste Positionsdatum 11,24 außerhalb des modellierten Straßenabschnitts 20 herangezogen werden.

Da der modellierte Straßenabschnitt 20 hinsichtlich möglicher GPS-Abweichungen als auch hinsichtlich geografischer Gegebenheiten konstruiert wurde, ist der Beweis, dass der modellierte Straßenabschnitt 20 befahren wurde, mit der Identifikation dieses Geo-Objekts gegeben. Da auch nach der Identifikation des modellierten Straßenabschnitts 20 weiter der Weg durch den modellierten Straßenabschnitt 20 hinsichtlich Richtung und Abstand überprüft wird, ist der bis zum Austrittspunkt zurückgelegte Weg innerhalb eines Toleranzbereichs 14 eindeutig nachvollziehbar. Die tatsächlich zurückgelegte Streckenlänge 16 muss somit näherungsweise der Länge des modellierten Straßenabschnitts 20 entsprechen, bei der es sich dann um den berechneten, modellierten zurückgelegten Weg 25 des Fahrzeugs handelt.

**Bezugszeichenliste**

| 10 | Straße |
|---|---|
| 11 | Positionsdatum |
| 12 | Berechnete Ausgleichsgerade |
| 13 | Lotabstand |
| 14 | Toleranzbereich |
| 15 | Positionsdatum zur Berechnung des zurückgelegten Wegs |
| 16 | Tatsächlich zurückgelegter Weg |
| 17 | Längeneinheit |
| 18 | Längeneinheit |
| 19 | Berechneter zurückgelegter Weg |
| 20 | Modellierter Straßenabschnitt |
| 21 | Positionsdatum (Eintrittspunkt in einen modellierten Straßenabschnitt) |
| 22 | Positionsdatum (Identifikationspunkt eines modellierten Straßenabschnitts) |
| 23 | Positionsdatum (Austrittspunkt aus einem modellierten Straßenabschnitt) |
| 24 | Positionsdatum (erster Punkt außerhalb eines modellierten Straßenabschnitts) |
| 25 | Berechneter (modellierter) zurückgelegter Weg |

**Patentansprüche**

1. Verfahren zum Bestimmen eines zurückgelegten Wegs eines Fahrzeugs bei der Befahrung von - insbesondere nutzungsgebührenpflichtigen - Straßen innerhalb eines Straßennetzes, mit folgenden Schritten:

   a) Positionsdaten (11, 15, 21, 22, 23, 24) eines dem Fahrzeug zugeordneten Endgeräts werden mittels eines Positionsbestimmungssystems ermittelt;
   b) die ermittelten Positionsdaten (11, 15, 21, 22, 23, 24) werden an ein Erfassungssystem mit wenigstens einer Rechnereinheit übertragen;
   c) aus den übertragenen Positionsdaten (11, 15, 21, 22, 23, 24) wird im Erfassungssystem der zurückgelegte Weg (19, 25) des Fahrzeugs berechnet,
   d) die Berechnung des zurückgelegten Wegs (19, 25) nur anhand solcher Positionsdaten (15, 21, 22, 23, 24) erfolgt, die mindestens einem vorgegebenen Auswahlkriterium entsprechen, **dadurch gekennzeichnet, dass** als Positionsdaten innerhalb eines modellierten Straßenabschnittes Positionsdaten zur wegberechnung verwendet werden, die den modellierten Straßenabschnitt identifizieren, und als Positionsdaten außerhalb eines modellierten Straßenabschnitts Positionsdaten zur wegberechnung verwendet werden, die von mindestens einem vorgegebenen Schwellenwert abweichen.

2. Verfahren nach Anspruch 1, **dadurch gekennzeichnet, dass** anhand der ermittelten Positionsdaten (11, 15, 21, 22, 23, 24) im Erfassungssystem zunächst überprüft wird, ob oder ob nicht das Fahrzeug einen modellierten Straßenabschnitt (20) befährt.

3. Verfahren nach Anspruch 1 oder 2, **dadurch gekennzeichnet, dass** die Berechnung des zurückgelegten Wegs (19, 25) anhand der Positionsdaten (15, 21, 22, 23, 24) mittels eines Berechnungsverfahrens, insbesondere mittels eines Approximationsverfahrens oder eines Interpolationsverfahrens, erfolgt.

4. Verfahren nach einem der Ansprüche 1 bis 3, **dadurch gekennzeichnet, dass** die Berechnung des zurückgelegten Wegs (19, 25) nur anhand solcher Positionsdaten (15, 21, 22, 23, 24) erfolgt, die über einem definierten Schwellwert liegen.

5. Verfahren nach Anspruch 4, **dadurch gekennzeichnet, dass** die Berechnung des zurückgelegten Wegs (19) nur anhand solcher Positionsdaten (15, 21, 22, 23, 24) erfolgt, die über einem definierten Schwellwert bezüglich der Fahrtrichtungsabweichung und/oder bezüglich der Änderung der Positionsdaten und/oder bezüglich der Qualität der Positionsdaten liegen.

6. Verfahren nach Anspruch 4 oder 5, **dadurch gekennzeichnet, dass** für alle ermittelten Positionsdaten (11, 15, 21, 22, 23, 24) mittels eines Berechnungsverfahrens eine Ausgleichsgerade (12) berechnet wird, dass als Schwellwert ein vorgegebener Lotabstand (13) zu der Ausgleichsgeraden (12) festgelegt wird und dass bei Ermittlung eines Positionsdatums (11), das einen größeren Abstand zur Ausgleichsgeraden (12) als der vorgegebene Lotabstand (13) aufweist, das unmittelbar vor diesem Positionsdatum (11) ermittelte Positionsdatum (15) zur Berechnung des zurückgelegten Wegs (19) herangezogen wird.

7. Verfahren nach Anspruch 4 oder 5, **dadurch gekennzeichnet, dass** für alle ermittelten Positionsdaten (11, 15, 21, 22, 23, 24) mittels eines Berechnungsverfahrens eine Ausgleichsgerade (12) berechnet wird, dass als Schwellwert ein vorgegebener Winkel zu der Ausgleichsgeraden (12) festgelegt wird und dass bei Ermittlung eines Positionsdatums (11), das einen größeren Winkel zur Ausgleichsgeraden (12) als der vorgegebene Winkel aufweist, das unmittelbar vor diesem Positionsdatum (11) ermittelte Positionsdatum (15) zur Berechnung des zurückgelegten Wegs (19) herangezogen wird.

8. Verfahren nach einem der Ansprüche 1 bis 7, **dadurch gekennzeichnet, dass** die Berechnung des zurückgelegten Wegs anhand von Positionsdaten erfolgt, die nach einem bestimmten Zeitintervall und/oder nach einer bestimmten Strecke ermittelt werden.

9. Verfahren nach einem der Ansprüche 1 bis 8, **dadurch gekennzeichnet, dass** für die Berechnung des zurückgelegten Wegs (25) solche Positionsdaten verwendet werden, die den Eintritt (21) in den modellierten Straßenabschnitt (20) und/oder den Austritt (23) aus dem modellierten Straßenabschnitt (20) und/oder ein erstes Positionsdatum (24) außerhalb des modellierten Straßenabschnitts (20) markieren.

10. Verfahren nach einem der Ansprüche 1 bis 9, **dadurch gekennzeichnet, dass** für die Berechnung des zurückgelegten Wegs (25) wenigstens ein Positionsdatum (22) verwendet wird, das einen Identifizierungspunkt innerhalb des modellierten Straßenabschnitts (20) bildet.

11. Verfahren nach einem der Ansprüche 1 bis 10, **dadurch gekennzeichnet, dass** einem erfassten Fahrzeug Gebühren zugeordnet werden.

12. Verfahren nach einem der Ansprüche 1 bis 10, **dadurch gekennzeichnet, dass** die zurückgelegte Route und/oder die zurückgelegte Entfernung eines Fahrzeugs in einem Straßennetz bestimmt wird.

13. Anordnung zum Bestimmen eines zurückgelegten Wegs (19, 25) eines Fahrzeugs bei der Befahrung von - insbesondere nutzungsgebührenpflichtigen - Straßen innerhalb eines Straßennetzes, aufweisend ein Positionsbestimmungssystem zum Ermitteln von Positionsdaten (11, 15, 21, 22, 23, 24) eines dem Fahrzeug zugeordneten Endgeräts, ein Erfassungssystem mit wenigstens einer Rechnereinheit, an welches die Positionsdaten (11, 15, 21, 22, 23, 24) übertragen werden oder übertragbar sind, sowie Mittel, um aus den übertragenen Positionsdaten (11, 15, 21, 22, 23, 24) den zurückgelegten Weg (19, 25) des Fahrzeugs zu berechnen, wobei die Mittel zur Berechnung des zurückgelegten Wegs (19, 25) derart ausgebildet sind, dass zur Berechnung des zurückgelegten Wegs (19, 25) nur solche Positionsdaten (11, 15, 21, 22, 23, 24) ausgewählt und verwendet werden, die mindestens einem vorgegebenen Auswahlkriterium entsprechen, **dadurch gekennzeichnet, dass** als Positionsdaten innerhalb eines modellierten Straßenabschnittes Positionsdaten zur Wegberechnung verwendet werden, die den modellierten Straßenabschnitt identifizieren, und als Positionsdaten außerhalb eines modellierten Straßenabschnitts Positionsdaten zur Wegberechnung verwendet werden, die von mindestens einem vorgegebenen Schwellenwert abweichen.

14. Anordnung nach Anspruch 13, **dadurch gekennzeichnet, dass** diese Mittel zur Durchführung des Verfahrens nach einem der Ansprüche 1 bis 12 aufweist.

## Claims

1. Method of determining a distance travelled by a vehicle when travelling over roads - particularly roads subject to a toll for usage - within a road network, comprising the following steps:

   a) positional data (11, 15, 21, 22, 23, 24) of a terminal associated with the vehicle are ascertained using a position determining system;
   b) the positional data (11, 15, 21, 22, 23, 24) determined are transmitted to a detecting system with at least one computer unit;
   c) from the transmitted positional data (11, 15, 21, 22, 23, 24), the distance travelled (19, 25) by the vehicle is calculated in the detecting system,
   d) the calculation of the distance travelled (19, 25) is carried out using only positional data (15, 21, 22, 23, 24) that correspond to at least one pre-determined selection criterion,

   **characterised in that**
   positional data for calculating distance which identify the road sector modelled are used as positional data within a modelled road sector, and positional data for calculating distance which deviate from at least one pre-set threshold value are used as positional data outside a modelled road sector.

2. Method according to claim 1, **characterised in that** using the positional data (11, 15, 21, 22, 23, 24) determined, first of all a check is carried out in the detecting system as to whether or not the vehicle is travelling within a modelled road sector (20).

3. Method according to claim 1 or 2, **characterised in that** the calculation of the distance travelled (19, 25) is carried out using the positional data (15, 21, 22, 23, 24) by means of a calculation process, particularly an approximation process or an interpolation process.

4. Method according to one of claims 1 to 3, **characterised in that** the distance travelled (19, 25) is calculated only using such positional data (15, 21, 22, 23, 24) as are above a defined threshold value.

5. Method according to claim 4, **characterised in that** the distance travelled (19) is calculated only using such positional data (15, 21, 22, 23, 24) as are above a defined threshold value in relation to the deviation from the direction of travel and/or in relation to the change in the positional data and/or in relation to the quality of the positional data.

6. Method according to claim 4 or 5, **characterised in that** for all the positional data (11, 15, 21, 22, 23, 24) determined, a compensation line (12) is calculated using a calculation process, **in that** a pre-set perpendicular distance (13) from the compensation line (12) is fixed as a threshold value, and **in that** when a positional datum (11) is determined that is at a greater distance from the compensation line (12) than the pre-set perpendicular value (13), the positional datum (15) determined immediately before this positional datum (11) is used to help calculate the distance travelled (19).

7. Method according to claim 4 or 5, **characterised in that** for all the positional data (11, 15, 21, 22, 23, 24) determined, a compensation line (12) is calculated using a calculation process, **in that** a pre-set angle to the compensation line (12) is fixed as a threshold value, and **in that** when a positional datum (11) is determined that is at a greater angle to the compensation line (12) than the pre-set angle, the positional datum (15) determined immediately before this positional datum (11) is used to help calculate the distance travelled (19).

8. Method according to one of claims 1 to 7, **characterised in that** the distance travelled is calculated using positional data that are determined after a specific time interval and/or after a specific distance.

9. Method according to one of claims 1 to 8, **characterised in that** the distance travelled (25) is calculated using positional data of the kind that mark the entry (21) into the modelled road sector (20) and/or the exit (23) from the modelled road sector (20) and/or a first positional datum (24) outside the modelled road sector (20).

10. Method according to one of claims 1 to 9, **characterised in that** the distance travelled (25) is calculated using at least one positional datum (22) that forms an identification point within the modelled road sector (20).

11. Method according to one of claims 1 to 10, **characterised in that** toll fees are allocated to a detected vehicle.

12. Method according to one of claims 1 to 10, **characterised in that** the route travelled and/or the distance travelled by a vehicle within a road network is determined.

13. System for determining the distance travelled (19, 25) by a vehicle when travelling over roads - particularly roads subject to a toll for usage - within a road network, comprising a position determining system for ascertaining positional data (11, 15, 21, 22, 23, 24) of a terminal associated with the vehicle, a detecting system with at least one computer unit, to which the positional data (11, 15, 21, 22, 23, 24) are transmitted or transmissible, and means for calculating, from the positional data (11, 15, 21, 22, 23, 24) transmitted, the distance travelled (19, 25) by the vehicle, the means for calculating the distance travelled (19, 25) being arranged so that the distance travelled (19, 25) is calculated by selecting and using only positional data (11, 15, 21, 22, 23, 24) that correspond to at least one pre-determined selection criterion,
**characterised in that**
positional data for calculating distance which identify the road sector modelled are used as positional data within a modelled road sector, and
positional data for calculating distance which deviate from at least one pre-set threshold value are used as positional data outside a modelled road sector.

14. System according to claim 13, **characterised in that** it comprises means for carrying out the method according to one of claims 1 to 12.

## Revendications

1. Procédé destiné à la détermination d'une trajectoire parcourue par un véhicule lorsqu'il emprunte des routes, en particulier à péages, dans un réseau routier, avec les étapes suivantes :

    a) des données de position (11, 15, 21, 22, 23, 24) d'un terminal associé au véhicule sont déterminées au moyen d'un système de détermination de position ;

b) les données de position (11, 15, 21, 22, 23, 24) déterminées sont transmises à un système d'enregistrement avec au moins une unité de calcul ;

c) à partir des données de position (11, 15, 21, 22, 23, 24) transmises est calculée dans le système d'enregistrement la trajectoire parcourue (19, 25) par le véhicule,

d) le calcul de la trajectoire parcourue (19, 25) est effectué seulement au moyen de telles données de position (15, 21, 22, 23, 24) qui correspondent au moins à un critère de sélection prescrit, **caractérisé en ce que** comme données de position dans un tronçon de route modelé sont utilisées des données de position pour le calcul de la trajectoire, lesquelles identifient le tronçon de route modelé et **en ce que** comme données de position en dehors d'un tronçon de route modelé sont utilisées des données de position pour le calcul de la trajectoire, lesquelles divergent d'au moins une valeur seuil prescrite.

2. Procédé selon la revendication 1, **caractérisé en ce qu'**au moyen des données de position (11, 15, 21, 22, 23, 24) déterminées dans le système d'enregistrement, il est vérifié tout d'abord si le véhicule emprunte ou n'emprunte pas un tronçon de route (20) modelé.

3. Procédé selon la revendication 1 ou 2, **caractérisé en ce que** le calcul de la trajectoire parcourue (19, 25) est effectué à l'aide des données de position (15, 21, 22, 23, 24) au moyen d'un procédé de calcul, en particulier au moyen d'un procédé d'approximation ou d'un procédé d'interpolation.

4. Procédé selon l'une quelconque des revendications 1 à 3, **caractérisé en ce que** le calcul de la trajectoire parcourue (19, 25) est effectué seulement au moyen de telles données de position (15, 21, 22, 23, 24) qui se trouvent au-dessus d'une valeur seuil définie.

5. Procédé selon la revendication 4, **caractérisé en ce que** le calcul de la trajectoire parcourue (19) est effectué seulement au moyen de telles données de position (15, 21, 22, 23, 24) qui se trouvent au-dessus d'une valeur seuil définie par rapport à la divergence de sens de la marche et/ou par rapport à la modification des données de position et/ou par rapport à la qualité des données de position.

6. Procédé selon la revendication 4 ou 5, **caractérisé en ce que** pour toutes les données de position (11, 15, 21, 22, 23, 24) déterminées au moyen d'un procédé de calcul, une droite d'interpolation (12) est calculée, **en ce que** comme valeur seuil est déterminée une distance verticale (13) prescrite par rapport à la droite d'interpolation (12) et **en ce que** lors de la détermination d'une donnée de position (11) qui présente une distance plus grande par rapport à la droite d'interpolation (12) que la distance verticale (13) prescrite, la donnée de position (15) déterminée directement avant cette donnée de position (11) est consultée pour le calcul de la trajectoire parcourue (19).

7. Procédé selon la revendication 4 ou 5, **caractérisé en ce que** pour toutes les données de position (11, 15, 21, 22, 23, 24) déterminées au moyen d'un procédé de calcul, une droite d'interpolation (12) est calculée, **en ce que** comme valeur seuil est déterminé un angle prescrit par rapport à la droite d'interpolation (12) et **en ce que** lors de la détermination d'une donnée de position (11) qui présente un angle plus grand par rapport à la droite d'interpolation (12) que l'angle prescrit, la donnée de position (15) déterminée directement avant cette donnée de position (11) est consultée pour le calcul de la trajectoire parcourue (19).

8. Procédé selon l'une quelconque des revendications 1 à 7, **caractérisé en ce que** le calcul de la trajectoire parcourue est effectué au moyen de données de position qui sont déterminées après un intervalle de temps déterminé et/ou après un parcours déterminé.

9. Procédé selon l'une quelconque des revendications 1 à 8, **caractérisé en ce que** pour le calcul de la trajectoire parcourue (25), de telles données de position sont utilisées, lesquelles marquent l'entrée (21) dans le tronçon de route (20) modelé et/ou la sortie (23) du tronçon de route (20) modelé et/ou une première donnée de position (24) en dehors du tronçon de route (20) modelé.

10. Procédé selon l'une quelconque des revendications 1 à 9, **caractérisé en ce que** pour le calcul de la trajectoire parcourue (25), au moins une donnée de position (22) est utilisée, laquelle forme un point d'identification à l'intérieur du tronçon de route (20) modelé.

11. Procédé selon l'une quelconque des revendications 1 à 10, **caractérisé en ce que** des taxes sont associées à un véhicule enregistré.

12. Procédé selon l'une quelconque des revendications 1 à 10, **caractérisé en ce que** la route parcourue et/ou la distance parcourue par un véhicule dans un réseau routier est déterminée.

13. Ensemble destiné à déterminer une trajectoire parcourue (19, 25) par un véhicule lorsqu'il emprunte des routes, en particulier à péages, dans un réseau routier, présentant un système de détermination de position pour déterminer des données de position (11, 15, 21, 22, 23, 24) d'un terminal associé au véhicule, un système d'enregistrement avec au moins une unité de calcul, à laquelle les données de position (11, 15, 21, 22, 23, 24) sont ou peuvent être transférées, ainsi que des moyens afin de calculer à partir des données de position (11, 15, 21, 22, 23, 24) transmises la trajectoire parcourue (19, 25) par le véhicule, les moyens pour le calcul de la trajectoire parcourue (19, 25) étant réalisés de telle sorte que pour le calcul de la trajectoire (19, 25) parcourue, seules de telles données de position (11, 15, 21, 22, 23, 24) sont sélectionnées et utilisées, lesquelles correspondent au moins à un critère de sélection prescrit, **caractérisé en ce que** comme données de position dans un tronçon de route modelé sont utilisées des données de position pour le calcul de la trajectoire, lesquelles identifient le tronçon de route modelé et **en ce que** comme données de position en dehors d'un tronçon de route modelé sont utilisées des données de position pour le calcul de la trajectoire, lesquelles divergent d'au moins une valeur seuil prescrite.

14. Ensemble selon la revendication 13, **caractérisé en ce que** celui-ci présente des moyens pour la mise en oeuvre du procédé selon l'une quelconque des revendications 1 à 12.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03034346 A1

- EP 1120749 A1